(19) Europäisches Patentamt

European Patent Office

Office européen des brevets

(11) **EP 1 073 181 A1**

(12) **EUROPÄISCHE PATENTANMELDUNG**

(43) Veröffentlichungstag:
**31.01.2001 Patentblatt 2001/05**

(51) Int. Cl.⁷: **H02K 15/02**, H02K 1/16,
H02K 1/18

(21) Anmeldenummer: **00115115.8**

(22) Anmeldetag: **12.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.07.1999 DE 19934858**

(71) Anmelder: **ABB RESEARCH LTD.**
**8050 Zürich (CH)**

(72) Erfinder:
• **Shen, Jinxing, Dr.-Ing.**
**69121 Heidelberg (DE)**

• **Deckart, Ulrich, Dr. Ing.**
**69181 Leimen (DE)**
• **Porteous, Tom, Dr.**
**72231 Vaesteras (SE)**
• **Jensen, Niels M.**
**5560 Aarup (DK)**

(74) Vertreter: **Miller, Toivo et al**
**ABB Patent GmbH**
**Postfach 10 03 51**
**68128 Mannheim (DE)**

(54) **Rotierende elektrische Maschine und Verfahren zu deren Herstellung**

(57)    Die Erfindung bezieht sich auf eine Maschine (1) mit einem innen liegenden Rotor (2) und einem außen liegenden Stator (3). Der Stator (3) ist aus einem äußeren Statorring (4) und einem inneren Statorring (5) zusammengesetzt, wobei der äußere Statorring (4) und der innere Statorring (5) aus jeweils wenigstens einem Band (4B, 5B) gewickelt und mechanisch miteinander verbunden werden.

Fig. 8

**Beschreibung**

Die Erfindung bezieht sich auf eine rotierende elektrische Maschine gemäß dem Oberbegriff des Patentanspruchs 1, sowie auf ein Verfahren zur Herstellung einer solchen Maschine gemäß Patentanspruch 8.

Bei Maschinen mit einem Rotor und einem Stator, sind Ausführungsformen bekannt geworden, bei denen der Stator aus einem äußeren Statorring und einem inneren Statorring zusammengebaut wird. Diese beiden Ringe wiederum werden aus flächigen Bauelementen zusammengefügt. Diese haben alle die gleiche Form. Sie werden aufeinander gesetzt und dann verpreßt. Da die Randprofile der flächigen Bauelemente für alle Lagen einheitlich sind, ergibt sich ein durchgehender Spalt, der eine beträchtliche magnetische Reluktanz verursacht. Der äußere und der innere Statorring sind über einen Kleber dauerhaft miteinander verbunden. Der mit dem Kleber gefüllte Spalt stellt ein großes Hindernis für den magnetischen Fluß und die Ableitung der Wärme dar. Schadstoffe, die in dem Kleber enthalten sind, belasten zudem die Umwelt.

Der Erfindung liegt deshalb die Aufgabe zugrunde, eine Maschine der eingangs genannten Art aufzuzeigen, bei der auf einen Kleber zum Verbinden des äußeren Statorrings mit dem inneren Statorring verzichtet werden kann. Ferner liegt der Erfindung die Aufgabe zugrunde, eine Verfahren aufzuzeigen, mit dem sich eine solche Maschine herstellen läßt.

Die Aufgabe die Maschine betreffend wird durch die Merkmale des Patentanspruchs 1 gelöst.

Die Aufgabe das Verfahren betreffend wird durch die Merkmale des Patentanspruchs 8 gelöst.

Weitere erfinderische Merkmale sind in den abhängigen Ansprüchen gekennzeichnet.

Die Erfindung wird nachfolgend an Hand von schematischen Zeichnungen näher erläutert.

Es zeigen:

Fig. 1 eine erfindungsgemäße rotierende elektrische Maschine im Vertikalschnitt,

Fig. 2 ein Band zum Wickeln des äußeren Statorrings,

Fig. 3 das Wickeln des äußeren Statorrings,

Fig. 4 ein Band zum Wickeln des inneren Statorrings,

Fig. 5 das Wickeln des inneren Statorrings,

Fig. 6 die Herstellung eines Bandes gemäß Fig. 4,

Fig. 7 den gewickelten inneren Statorring im Schnitt,

Fig. 8 den äußeren Statorring und den inneren Statorring vor dem Zusammenfügen.

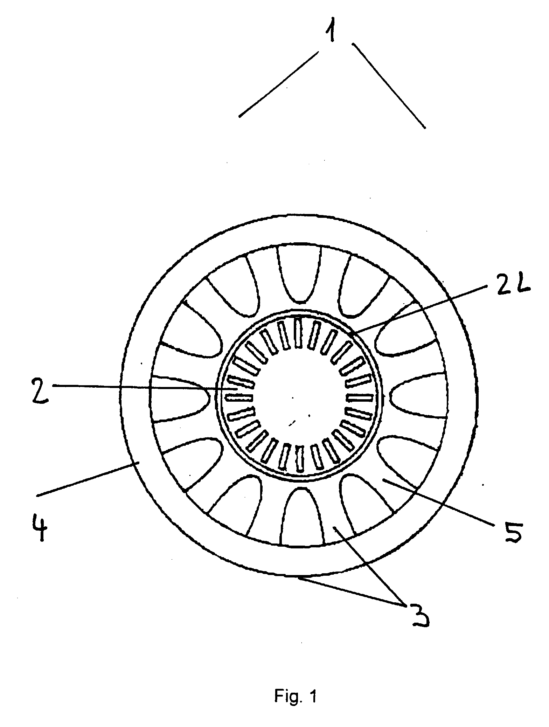

Fig. 1 zeigt eine rotierende elektrische Maschine 1 mit einem innen liegenden Rotor 2 und einem außen liegenden zweiteiligen Stator 3. Der Rotor 2 und der Stator 3 sind durch einen ringförmigen Luftspalt 2L voneinander getrennt. Der Stator 3 ist aus einem äußeren Statorring 4 und einem inneren Statorring 5 dauerhaft zusammengefügt. Das Verbinden des äußeren Statorrings 4 mit dem inneren Statorring 5 erfolgt mit Hilfe eines Schrumpfverfahrens. Hierbei wird beispielsweise der äußere Statorring 4 erwärmt. Nach dem sich sein innerer Durchmesser so weit wie erforderlich gedehnt hat, wird er über den inneren Statorring 4 geschoben. Nach dem Abkühlen des äußeren Statorrings 4 sind die beiden Ringe dauerhaft und fest miteinander verbunden. Für die Schrumpfverbindung kann auch der innere Statorring 5 stark gekühlt werden, damit sich sein Außendurchmesser reduziert. Sind die gewünschten Abmessungen erreicht, wird der innere Statorring 5 in den äußeren Statorring 4 geschoben. Ferner ist es möglich, den äußeren Statorring 4 zu erwärmen, und gleichzeitig den inneren Statorring 5 zu kühlen. Hierbei muß der äußere Statorring 4 nicht so weit erwärmt werden, wie das der Fall ist, wenn der innere Statorring 5 überhaupt nicht gekühlt wird. Bei einer geringeren Erwärmung des äußeren Statorring werden die Isoliermaterialien der Bleche und der Kupferdrähte geschont.

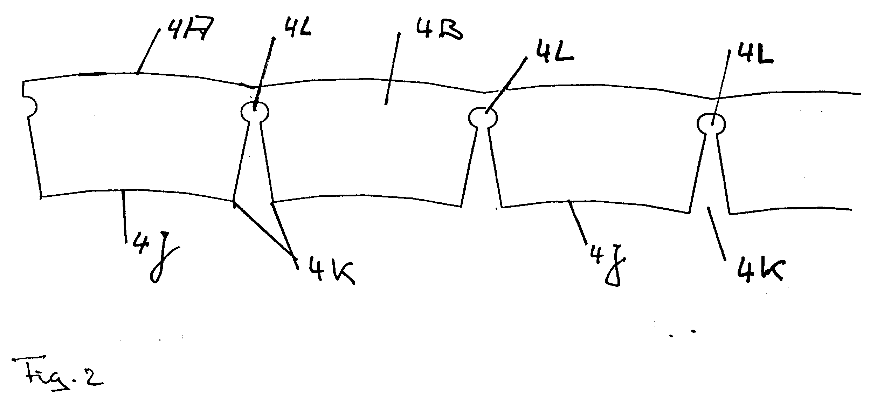

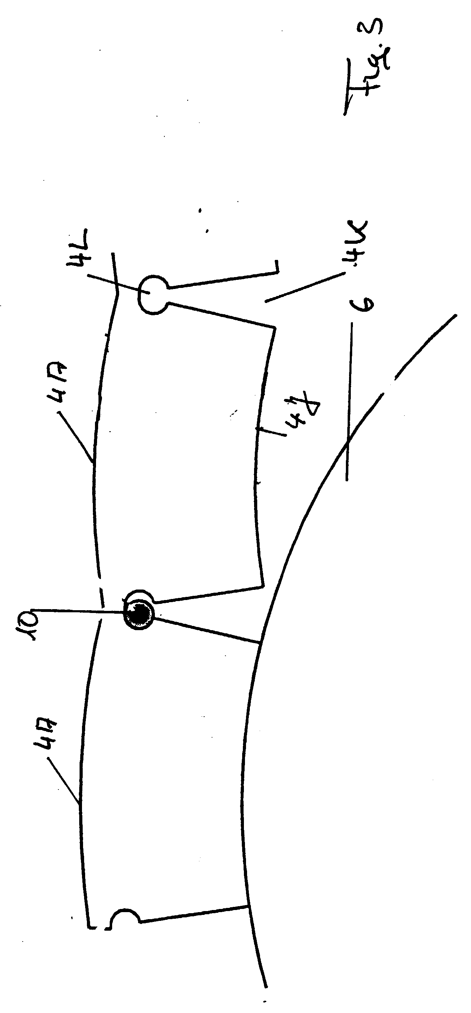

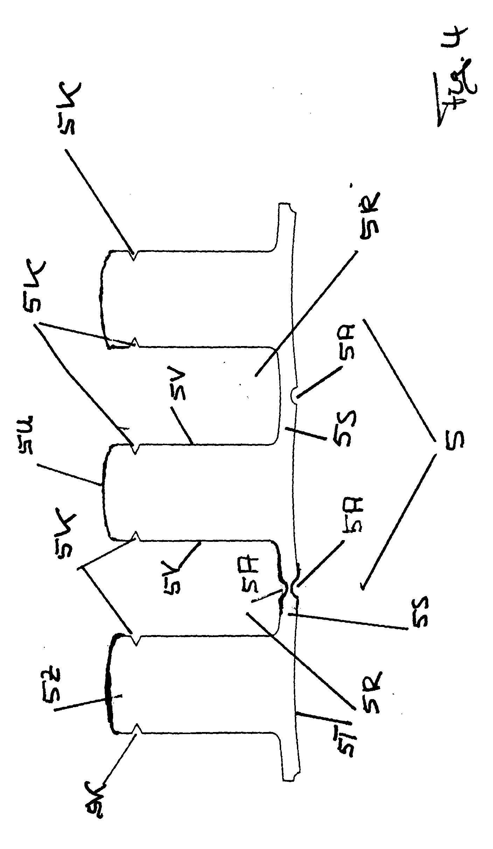

Erfindungsgemäß werden sowohl der äußere Statorring 4 als auch der innere Statorring 5 aus speziell geformten Bändern 4B bzw. 5B gefertigt, wie sie in den Figuren 2 und 4 zu sehen sind. Für die Herstellung des äußeren Statorrings 4 bzw. des inneren Statorrings 5 sind ein oder mehrere solche Bänder 4B, 5B erforderlich. Die Anzahl der Bänder 4B, 5B richtet sich nach der gewünschten Größe des Stators 3. Ein Ausschnitt eines Bandes 4B, das zum Wickeln des äußeren Statorrings 4 verwendet wird, ist in Fig. 2 dargestellt. Das Band 4B ist in definierten Abständen mit keilförmigen Einschnitten 4K versehen. Jeder keilförmige Einschnitt verläuft senkrecht zur Längsachse des Bands 4B. Der Öffnungswinkel des keilförmigen Einschnittes ist so ausgelegt, daß die keilförmigen Öffnungen nach dem Wickeln gerade geschlossen sind. Am innen liegenden Ende eines jeden keilförmigen Einschnitts ist ein Loch 4L ausgebildet. Die Löcher 4L haben bei dem hier dargestellten Ausführungsbeispiel einen nahezu runden Querschnitt. Die Löcher 4L können jedoch auch einen anderen Querschnitt aufweisen, wie an Hand von Fig. 3 zu sehen ist. Mit den keilförmigen Einschnitten 4K und den Löchern werden die Deformationen des Bandes 4B beim Aufwickeln lokalisiert. Wie an Hand von Fig. 3 zu sehen ist, wird zur Ausbildung des äußeren Statorrings 3 ein erstes Band 4B auf einen Dorn 6 gewickelt. Der Dorn 6 hat einen Durchmesser der dem Innendurchmesser des auszubildenden äußeren Statorrings 4 entspricht. Wie die Figuren 3 und 4 ferner zeigen, ist die Längskante 4J, mit welcher das Band 4B auf den Dorn 6 aufgesetzt wird, konkav gewölbt, während die zweite Längskante 4A konvexe Wölbungen aufweist. Der Abstand zwischen jeweils zwei keilförmigen Einschnitten 4K hat eine Länge $L = D_i * \sin(\pi/(n_s \pm 1/m))$, wobei $D_i$ für den Innendurchmesser des äußeren Statorrings 4 steht; $n_s \pm 1/m$ ist die Anzahl der Abschnitte zwischen den keilförmigen Einschnitten 4K, die benötigt werden, um eine Lage auf den Dorn 6 zu wickeln. Über den Parameter m wird die Überlappung der Abschnitte von Lage zu Lage festgelegt.

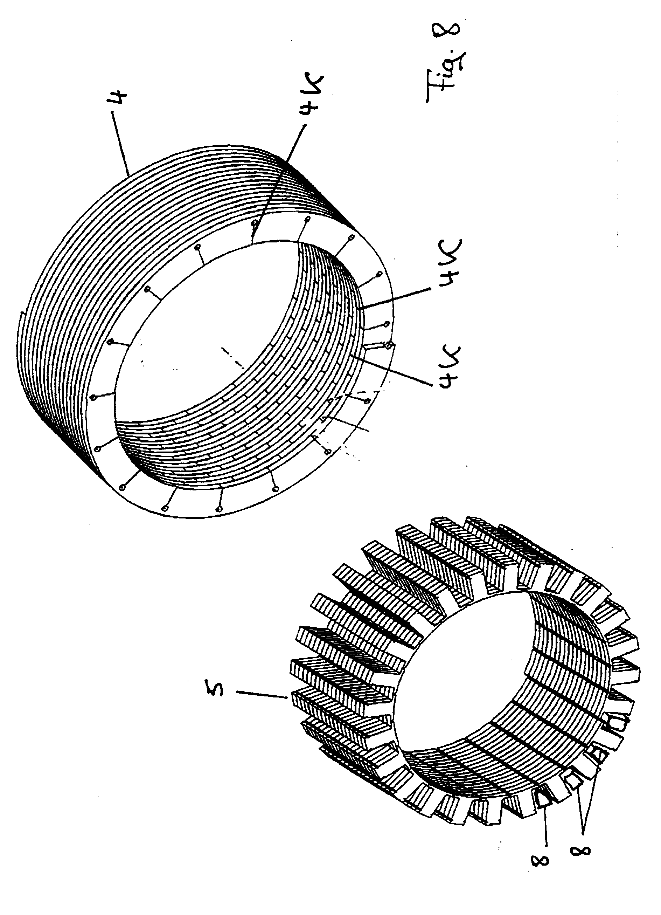

Beim Aufwickeln des Bandes 4B wird jeder Einschnitt 4K einer Lage beidseitig von einem vollständig geschlossenen Stück des Bandes 4B überdeckt, wie an Hand von Fig.8 zu sehen ist. An keiner Stelle der Wicklung kommt es vor, daß der Einschnitte 4K einer vorangehenden Lage und einer nachfolgenden Lage deckungsgleich aufeinander liegen. Die Bildung von Luftspalten ist damit selbst zwischen zwei aufeinander folgenden Lagen ganz und gar ausgeschlossen. Damit erfolgt an keiner Stelle innerhalb des äußeren Statorrings 4 eine Behinderung und somit eine Reduzierung des magnetischen Flusses.

Das Band 4B wird Lage für Lage auf den Dorn 6 gewickelt, und zwar so, daß es mit seiner Längskante 4J auf dem Dorn 6 aufsteht. Dabei wird das Band 4B im Bereich der keilförmigen Einschnitte zusammengeschoben, wodurch die Deformationen des Bandes 4B lokalisiert werden. Beim Wickeln entsteht ein geschlossenes Band 4B, da die keilförmigen Einschnitte 4K zusammengeschoben werden. Falls sich beim Aufsetzen der Kanten und beim Positionieren des Bandes 4B Schwierigkeiten ergeben, ist es möglich, in die Löcher 4L Montagestifte 10 zu stecken, mit deren Hitfe das Band 4B an der jeweils vorgeschriebenen Stelle positioniert werden kann. Ist die gewünschte Anzahl von Wicklungen bzw. Lagen aufgespult, so wird das Band 4B durchtrennt. Das auf dem Dorn 6 befindliche Ende wird so befestigt, daß das Band 46 nicht selbständig von dem Dorn 6 gleiten kann. Der soweit gefertigte Statorring 4 wird anschließend mit einem vorgebbaren Druck zusammengepreßt, so daß keine Luftspalte zwischen den Wicklungen bzw. Lagen verbleiben. Damit ist der äußere Statorring 4 fertig gestellt.

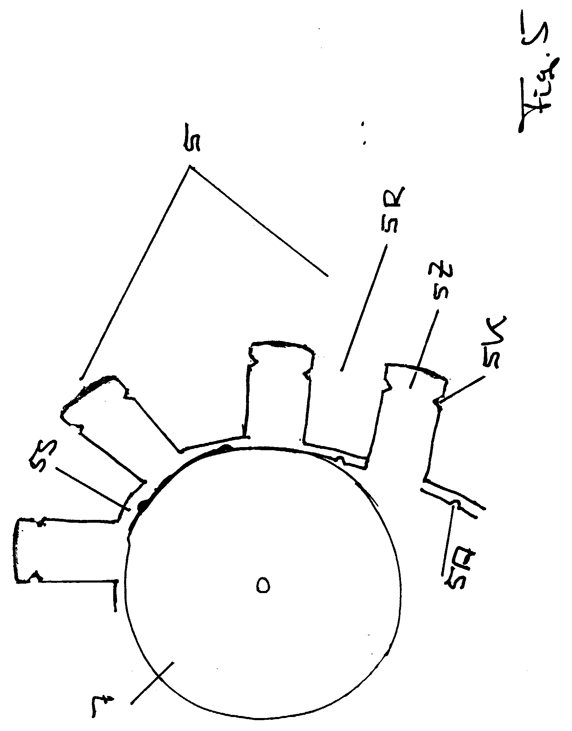

Der innere Statorring 5 wird in ähnlicher Weise gefertigt. Hierfür wird das in Fig. 4 dargestellte Band 56 verwendet. Das Band 5B ist mit Zähnen 5Z versehen, deren Längsachsen senkrecht zur Längsachse des Bandes 5B ausgerichtet sind. Die Zahnflanken 5V stehen senkrecht auf der Längsachse des Bandes 5B. Wie die Figuren 4 und 5 ferner zeigen, ist die Längskante 5T, mit welcher das Band 5B auf den Dorn 7 aufgesetzt wird, konkav gewölbt, während die zweite Längskante 5U konvexe Wölbungen aufweist. Jeder Zahn 5Z kann an seinem freien ersten Ende an jeder Flanke 5V mit einer keilförmigen Ausnehmung 5K versehen sein, die zur Begrenzung der einzulegenden Kupferdrähte in einem Raum 5R verwendet werden kann. Zwei unmittelbar aufeinander folgende Zähne 5Z sind an ihren zweiten Enden über jewefis einen Steg 5S miteinander verbunden. Jeder Steg 5S ist mittig an einer oder beiden Längskanten mit jeweils einer Ausnehmung 5A versehen. Die Ausnehmungen 5A können, wie hier gezeigt, einen nah zu halbkreisförmigen Querschnitt aufweisen, der bei Bedarf auch anders geformt sein kann. Hiermit wird die Deformation des Bandes 5B beim Aufwickeln gemäß Fig. 5 lokalisiert.

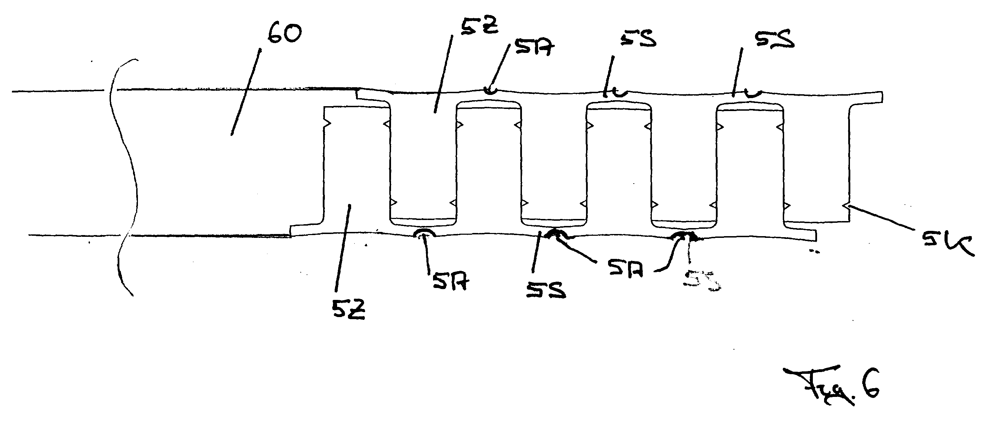

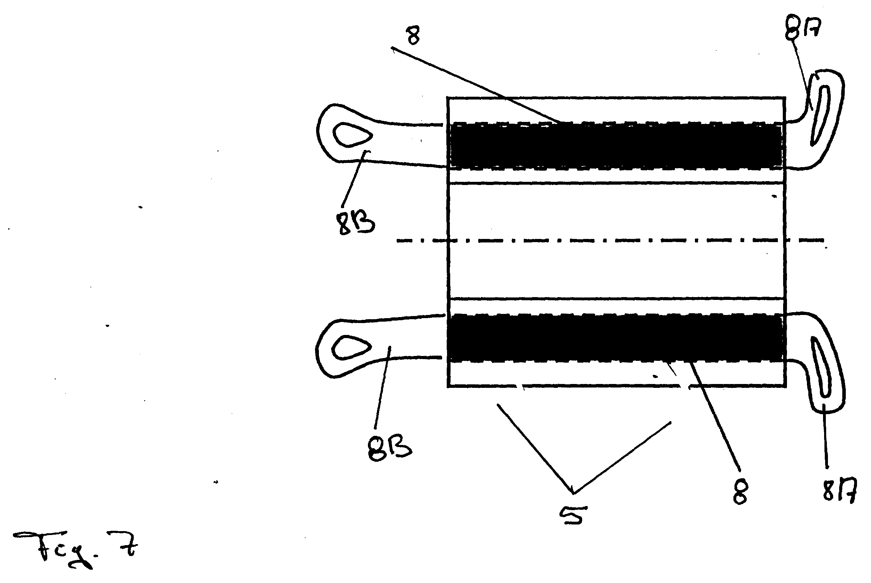

Für das Wickeln des inneren Statorrings 5 wird ein Dorn 7 verwendet. Dieser hat eine Außendurchmesser, der den an gewünschten Innendurchmesser des inneren Statorrings 5 angepaßt ist. Für die Herstellung des Bandes 5B wird eine Band 60 gemäß Fig. 6 verwendet, daß geringfügig breiter als das Band 5B ist. Mit Hilfe einer hierfür geeigneten Vorrichtung (hier nicht dargestellt) können aus dem Band 60 zwei Bänder 5B hergestellt werden. Das ist deshalb möglich, weil die Abstände zwischen jeweils zwei Zähnen 5Z an die Breite der Zähne 5Z angepaßt ist. Die Breite der Bänder 5B wird an die gewünschte Breite des Außendurchmessers angepaßt, den der innere Statorrings 5 haben soll. Wird der innere Statorring 5 zum Verbinden mit dem äußeren Statorring 4 gekühlt, damit sein äußerer Durchmesser zunächst etwas schrumpft, so wird der äußere Durchmesser des inneren Statorrings 5 geringfügig größer ausgebildet als der Innendurchmesser des äußeren Statorrings 4. Das Band 5B wird Lage für Lage so auf den Dorn 7 gewickelt, daß die Stege 5S mit ihren Außenkanten auf der Oberfläche des Dorns 7 aufstehen. Dabei wird sichergestellt, daß die Zähne 5Z einer jeden Lage deckungsgleich auf die Zähne 5Z der bereits aufgewickelten Lage kommen, wie Fig. 8 zeigt. Damit wird erreicht, daß zwischen zwei aufeinanderfolgenden Stapeln von Zähnen 5Z ein Raum 5R gebildet wird, der über seine gesamte Länge die gleichen Abmessungen aufweist. Jeder dieser Räume 5R wird seitlich von einem Stapel von Zähnen 5Z und auf der nach innen zugewandten Seite von einem Stapel Stegen 5S begrenzt. Nach außen hin sind die Räume 5R offen. Hat der innere Statorring 5 die gewünschte Länge erreicht, wird das Band 5B durchtrennt, und so befestigt, daß es nicht selbständig vom Dorn 7 gleiten kann. Anschließend wird der innere Statorring 5 so gepreßt, daß keine Luftspalte zwischen den einzelnen Lagen des aufgewickelten Bandes 5B verbleiben. Damit ist auch der innere Statorring 5 fertiggestellt. In jeden der Räume 5R wird jetzt eine elektrische Wicklung 8 eingesetzt, wie in Fig. 7 teilweise dargestellt. Um Kupfer einsparen zu können, weisen die elektrischen Wicklungen 8 an ihren ersten Enden Anschlüsse 8A auf, die zur Seite gebogen sind, während die Anschlüsse 8B an den zweiten Enden der elektrische Wicklungen 8 parallel zur Symmetrieachse des inneren Statorrings 5 geführt sind. In diesem Fall kann beim Verbinden der beiden Statorringe 4 und 5 der innere Statorring 5 nur aus einer Richtung in den bzw. der äußere Statorring 4 nur aus einer Richtung über den inneren Statorring 5 geschoben werden. Für den Fall, daß bei der Herstellung der Wicklungen 8 kein Kupfer eingespart werden muß, können die Wicklungen 8 an beiden Seiten mit Anschlüssen 8B versehen werden. Hierdurch wird das Verbinden der beiden Statorringe 4 und 5 erleichtert. Die beiden Statorringe 4 und 5 werden erfindungsgemäß mit Hilfe eines Schrumpfverfahrens miteinander verbunden. Zu diesem Zweck wird bei dem hier dargestellten Ausführungsbeispiel der innere Statorring 5 zunächst gekühlt und der äußere Statorring 4 erwärmt. Anschließend wird, wie Fig. 8 gezeigt, der innere Statorring 5 in den äußeren Statorring 4 bzw. der äußere Statorring 4 über den inneren Statorring 5 geschoben. Wenn die beiden Statorringe 4 und 5 wieder Raumtemperatur angenommen haben, sind sie fest und dauerhaft miteinander verbunden.

Erfindungsgemäß besteht die Möglichkeit einen Ring, der in gleicher Weise wie der äußere Statorring 4 hergestellt wird, als Teil des Rotors einer elektrischen Maschine zu verwenden.

**Patentansprüche**

1. Rotierende elektrische Maschine mit einem innen liegenden Rotor (2) und einem außen liegenden Stator (3), der aus einem äußeren Statorring (4) und einem inneren Statorring (5) zusammengefügt ist, dadurch gekennzeichnet, daß der äußere Statorring (4) und der innere Statorring (5) aus jeweils wenigstens einem Band (4B, 5B) gewickelt und dauerhaft mechanisch miteinander verbunden sind.

2. Maschine nach Anspruch 1, dadurch gekennzeichnet, daß der äußere Statorring (4) auf den inneren Statorring (5), der innere Statorring (5) in den äußeren Statorring (4), oder der äußere Statorring (4) auf und der innere Statorring (5) in den äußeren Statorring geschrumpft ist.

3. Maschine nach einem der Ansprüche 1 oder 2, dadurch gekennzeichnet, daß der äußere Statorring (4) aus einen Band (4B) hergestellt ist, das entlang einer ersten Längskante (4J) keilförmige Einschnitte (4K) aufweist, deren Längsachsen senkrecht zur Längsachse des Bandes (4B) ausgerichtet sind und die einen Öffnungswinkel aufweisen, dessen Abmessung gerade so groß ist, daß die keilförmigen Einschnitte (4K) nach dem Wickeln gerade geschossen sind, und daß am innen liegenden Ende eines jeden keilförmigen Einschnitts eine Loch (4L) mit vorgebbarem Querschnitt ausgebildet ist.

4. Maschine nach einem der Ansprüche 1 bis 3, dadurch gekennzeichnet, daß die Längskante (4J) des Bandes (4) zwischen jeweils zwei keilförmigen Einschnitten (4K) mit konkaven Wölbungen und die gegenüberliegende Längskante (4A) mit konvexen Wölbungen versehen ist, und daß der Abstand zwischen jeweils zwei keilförmigen Einschnitten (4K) eine Länge $L = D_i * \sin(\pi/(n_s \pm 1/m))$ aufweist, wobei $D_i$ für den Innendurchmesser des äußeren Statorrings (4) steht, $n_s \pm 1/m$ die Anzahl der Abschnitte zwischen den keilförmigen Einschnitten (4K) ist, die benötigt werden, um eine Lage auf den Dorn 6 zu wickeln, und mit m die Überlappung der Abschnitte von Lage zu Lage festgelegt ist.

5. Maschine nach einem der Ansprüche 1 bis 4, dadurch gekennzeichnet, daß das Band (4B) so zu einem äußeren Statorring (4) gewickelt, daß der Innenbereich des äußeren Statorrings (4) durch die konkaven Wölbungen der Längskante (4J) begrenzt ist.

6. Maschine nach einem der Ansprüche 1 bis 5, dadurch gekennzeichnet, daß der innere Statorring (5) aus einem Band (5B) hergestellt ist, das mit Zähnen (5Z) versehen ist, deren Längsachsen senkrecht zur Längsachse des Bandes (5B) ausgerichtet sind, und daß die Länge der Zähne (5Z) an die Breite des Bandes (5B) angepaßt ist.

7. Maschine nach einem der Ansprüche 1 bis 6, dadurch gekennzeichnet, daß jeder Zahn (5Z) im Bereich seines freien ersten Endes an jeder Flanke (5V) mit einer keilförmigen Ausnehmung (5K) versehen ist, daß die zweiten Enden von jeweils zwei unmittelbar aufeinander folgenden Zähnen (5Z) über jeweils einen Steg (5S) miteinander verbunden sind, dessen Länge an die Breite der Zähne (5Z) angepaßt und der mittig an einer oder beiden Längskanten mit je einer Ausnehmungen (5A) versehen ist.

8. Verfahren zur Herstellung einer rotierenden elektrischen Maschine mit einem innen liegenden Rotor (2) und einem außen liegenden Stator (3), der aus einem äußeren Statorring (4) und einem inneren Statorring (5) zusammengefügt wird, dadurch gekennzeichnet, daß der äußere Statorring (4) und der innere Statorring (5) aus jeweils wenigstens einem Band (4B, 5B) gewickelt und anschließend dauerhaft mechanisch miteinander verbunden werden.

9. Verfahren nach Anspruch 8, dadurch gekennzeichnet, daß der äußere Statorring (4) auf den inneren Statorring (5), der innere Statorring (5) in den äußeren Statorring (4) oder der äußere Statorring (4) auf und der innere Statorring (5) in den äußeren Statorring geschrumpft wird.

10. Verfahren nach einem der Ansprüche 8 oder 9, dadurch gekennzeichnet, daß der äußere Statorring (4) aus einen Band (4B) hergestellt wird, das entlang einer ersten Längskante (4J) keilförmige Einschnitte (4K) aufweist, deren Längsachsen senkrecht zur Längsachse des Bandes (4B) ausgerichtet werden und die einen Öffnungswinkel mit solchen Abmessungen aufweisen, daß die keilförmigen Einschnitte (4K) nach dem Wickeln gerade geschlossen werden, und daß am innen liegenden Ende eines jeden keilförmigen Einschnitts (4K) eine Loch (4L) mit vorgebbaren Querschnitt ausgebildet wird.

11. Verfahren nach einem der Ansprüche 8 bis 10, dadurch gekennzeichnet, jeder Abschnitte zwischen zwei keilförmigen Einschnitten (4K) mit einer konkaven und der Abschnitt der gegenüberliegenden Längskante (4A) mit einer konvexen Wölbung versehen wird, und daß der Abstand zwischen jeweils zwei keilförmigen Einschnitten (4K) eine Länge $L = D_i * \sin(\pi/(n_s \pm 1/m))$ aufweist, wobei $D_i$ für den Innendurchmesser des äußeren Statorrings (4) steht, $n_s \pm 1/m$ die Anzahl der Abschnitte zwischen den keilförmigen Einschnitten (4K) angibt, die benötigt werden, um eine Lage auf den Dorn 6 zu wickeln und mit m die Überlappung der Abschnitte von Lage zu Lage festgelegt.

12. Verfahren nach einem der Ansprüche 8 bis 11, dadurch gekennzeichnet, daß beim Aufwickeln des Bandes (4B) jeder Einschnitt (4K) einer jeden Lage zur Vermeidung von Luftspalten beidseitig von einem vollständig geschlossenen Stück des Bandes (4B) überdeckt wird.

13. Verfahren nach einem der Ansprüche 8 bis 12, dadurch gekennzeichnet, daß das Band (4B) auf einen Dorn (6) gewickelt wird, dessen Außendurchmesser gleich oder geringfügig kleiner als der Innendurchmesser des zu fertigenden äußeren Statorrings (4) gewählt wird, und daß das Band (4K) so auf den Dorn (6) gewickelt wird, daß die Längskante (4J) mit den keilförmigen Einschnitten (4K) auf dem Dorn (6) aufsteht.

14. Verfahren nach einem der Ansprüche 8 bis 13, dadurch gekennzeichnet, daß der innere Statorring (5) aus einem mit Zähnen (5Z) versehenen Band (5B) gewickelt wird, deren Längsachsen senkrecht zur Längsachse des Bandes (5B) ausgerichtet werden, und deren Länge an die Breite des Bandes (5B) angepaßt wird.

15. Verfahren nach einem der Ansprüche 8 bis 14, dadurch gekennzeichnet, daß jeder Zahl (5Z) im Bereich seines freien ersten Endes an jeder Flanke (5V) mit einer keilförmigen Ausnehmung (5K) versehen wird, daß die zweiten Enden von jeweils zwei unmittelbar aufeinander folgenden Zähnen (5Z) über jeweils einen Steg (5S) miteinander verbunden werden, dessen Länge an die Breite der Zähne (5Z) angepaßt und der an einer oder beiden Längskanten mittig mit einer Ausnehmung (5A) versehen wird.

16. Verfahren nach einem der Ansprüche 8 bis 15, dadurch gekennzeichnet, daß das Band (5B) so auf einen Dorn (7) gewickelt wird, daß die Stege (5S) auf dem Dorn (7) aufstehen, und daß anschließend in dem zwischen jeweils zwei Stapeln von Zähnen (5Z) gebildeten Raum (5R) jeweils eine elektrische Wicklung (8) angeordnet wird.

17. Verfahren nach einem der Ansprüche 8 bis 15, daß ein entsprechend dem äußeren Statorring (4) hergestellter Ring, als Teil des Rotors (2) einer elektrischen Maschine (1) verwendet wird.

Fig. 1

Fig. 2

Fig. 3

4A 10 4A 4L

4J 6 4K

EP 1 073 181 A1

Fig. 4

Fig. 5

Fig. 6

EP 1 073 181 A1

Fig. 2

12

Fig. 8

Europäisches
Patentamt

**EUROPÄISCHER RECHERCHENBERICHT**

Nummer der Anmeldung

EP 00 11 5115

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 403 401 A (ROSENBERRY) 13. September 1983 (1983-09-13) * Zusammenfassung * * Spalte 2, Zeile 30-41 * * Spalte 3, Zeile 9 - Spalte 4, Zeile 4 * * Spalte 4, Zeile 23-45 * * Spalte 5, Zeile 45 - Spalte 7, Zeile 56; Abbildungen 1-4,6 * --- | 1,2,6,8, 9,14 | H02K15/02 H02K1/16 H02K1/18 |
| A | PATENT ABSTRACTS OF JAPAN vol. 1997, no. 10, 31. Oktober 1997 (1997-10-31) -& JP 09 168251 A (TAMAGAWA SEIKI CO LTD), 24. Juni 1997 (1997-06-24) * Zusammenfassung; Abbildungen 1-4 * --- | 1,2,6,8, 9,14,16 | |
| A | PATENT ABSTRACTS OF JAPAN vol. 18, no. 137 (E-1518), 7. März 1994 (1994-03-07) -& JP 05 316694 A (YASKAWA ELECTRIC CORP), 26. November 1993 (1993-11-26) * Zusammenfassung; Abbildung 1 * --- | 1,2,6,8, 9,14,16 | |
| A | DE 298 02 718 U (ZEISE ELEKTRO & METALL GMBH) 22. Oktober 1998 (1998-10-22) * das ganze Dokument * --- | 1,2,6,8, 9,14,16 | RECHERCHIERTE SACHGEBIETE (Int.Cl.7) H02K |
| A | EP 0 871 282 A (KABUSHIKI KAISHA TOSHIBA) 14. Oktober 1998 (1998-10-14) * Zusammenfassung * * Spalte 16, Zeile 26-50 * * Spalte 21, Zeile 49 - Spalte 22, Zeile 36; Abbildungen 80-83,99-102 * --- -/-- | 3-7, 10-12,15 | |

Der vorliegende Recherchenbericht wurde für alle Patentansprüche erstellt

| Recherchenort | Abschlußdatum der Recherche | Prüfer |
|---|---|---|
| BERLIN | 6. November 2000 | Beitner, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**Europäisches Patentamt**

## EUROPÄISCHER RECHERCHENBERICHT

Nummer der Anmeldung

EP 00 11 5115

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN vol. 1999, no. 3, 31. März 1999 (1999-03-31) -& JP 10 322943 A (SHIBAURA ENG WORKS CO LTD), 4. Dezember 1998 (1998-12-04) * Zusammenfassung; Abbildungen 1,2,5,6 * --- | 3,4,6, 10,11,14 | |
| A | FR 2 109 301 A (SOCIETE UNELEC ) 26. Mai 1972 (1972-05-26) * Seite 3, Zeile 15-35; Abbildungen 3-5 * --- | 3,4,6, 10,11,14 | |
| A | US 3 842 493 A (OHUCHI ET AL.) 22. Oktober 1974 (1974-10-22) * Zusammenfassung * * Spalte 2, Zeile 45 - Spalte 3, Zeile 32; Abbildungen 1-3 * --- | 3,6,10, 14 | |
| A | GB 2 108 772 A (WESTINGHOUSE ELECTRIC CORPORATION) 18. Mai 1983 (1983-05-18) * Zusammenfassung * * Seite 3, Spalte 20-51; Abbildungen 1,2 * ----- | 12 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| BERLIN | 6. November 2000 | Beitner, M |

## ANHANG ZUM EUROPÄISCHEN RECHERCHENBERICHT
## ÜBER DIE EUROPÄISCHE PATENTANMELDUNG NR.

EP 00 11 5115

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2000

| Im Recherchenbericht angeführtes Patentdokument | Datum der Veröffentlichung | Mitglied(er) der Patentfamilie | Datum der Veröffentlichung |
|---|---|---|---|
| US 4403401 A | 13-09-1983 | US 4392073 A<br>BR 7906242 A<br>ES 483890 A<br>IT 1165296 B<br>JP 55063526 A | 05-07-1983<br>15-07-1980<br>01-09-1980<br>22-04-1987<br>13-05-1980 |
| JP 09168251 A | 24-06-1997 | KEINE | |
| JP 05316694 A | 26-11-1993 | KEINE | |
| DE 29802718 U | 22-10-1998 | KEINE | |
| EP 871282 A | 14-10-1998 | JP 10285880 A<br>JP 11164526 A<br>CN 1196598 A<br>US 5986377 A | 23-10-1998<br>18-06-1999<br>21-10-1998<br>16-11-1999 |
| JP 10322943 A | 04-12-1998 | KEINE | |
| FR 2109301 A | 26-05-1972 | BE 773667 A<br>DE 2150313 A<br>DK 127147 B<br>ES 395852 A<br>IT 939047 B<br>NL 7113884 A | 10-04-1972<br>13-04-1972<br>24-09-1973<br>01-10-1974<br>10-02-1973<br>11-04-1972 |
| US 3842493 A | 22-10-1974 | JP 53041321 B<br>DE 2236953 A<br>DE 2265310 A<br>US 3886256 A | 02-11-1978<br>15-02-1973<br>05-05-1977<br>27-05-1975 |
| GB 2108772 A | 18-05-1983 | AU 8847582 A<br>CA 1183568 A<br>IN 157129 A<br>JP 58086836 A<br>ZA 8206900 A | 12-05-1983<br>05-03-1985<br>25-01-1986<br>24-05-1983<br>26-10-1983 |

EPO FORM P0461

Für nähere Einzelheiten zu diesem Anhang : siehe Amtsblatt des Europäischen Patentamts, Nr.12/82